# EUROPÄISCHE PATENTSCHRIFT

(11) **EP 2 303 446 B1**
(45) Veröffentlichungstag und Bekanntmachung des Hinweises auf die Patenterteilung: **19.10.2011**
(21) Anmeldenummer: 09761729.4
(22) Anmeldetag: 10.06.2009
(51) Int. Cl.: B01J 2/12, A23G 3/26

(54) **TROMMELCOATER MIT NIR-MESSEINRICHTUNG**
DRUM COATER HAVING AN NIR MEASURING UNIT
ENROBEUSE À TAMBOUR AVEC DISPOSITIF DE MESURE NIR

(30) Priorität: 10.06.2008 CH 876082008
(43) Veröffentlichungstag der Anmeldung: 06.04.2011
(73) Patentinhaber: Glatt Maschinen- und Apparatebau AG, 4133 Pratteln (CH)
(72) Erfinder: MAURER, Frank, 79594 Inzlingen (DE)
(74) Vertreter: Braun, André jr.
(86) Internationale Anmeldenummer: PCT/EP2009/057139
(87) Internationale Veröffentlichungsnummer: WO 2009/150166

(56) Entgegenhaltungen:
- EP-A- 0 355 771
- WO-A-01/70195

## Beschreibung

Die Erfindung betrifft eine Filmcoatingvorrichtung mit einer rotierenden Trommel mit einer perforierten zylindrischen Wand und einer Einrichtung zur NIR-Spektralmessung des Beschichtungsguts. Der Begriff Filmcoatingvorrichtung umfasst für den Zweck dieser Beschreibung auch Vorrichtungen zur Aufbringung von funktionellen Überzügen auf Tabletten etc. Solche Vorrichtungen sind in der Fachwelt auch unter dem Begriff Trommelcoater bekannt.

Ein gattungsgemäßer Trommelcoater wird in EP 0 355 771 gezeigt. Im Rahmen der Qualitätskontrolle für pharmazeutische Produkte ist es vorteilhaft, das Beschichtungsgut während des Beschichtungsprozesses in Trommelcoatern mittels NIR-Spektroskopie zu überwachen. Die Sprühdüsen und ggf. Messvorrichtungen sind üblicherweise an feststehenden Tragarmen oder -galgen angebracht, die durch die frontseitige Öffnung der Trommel in deren Innenraum ragen bzw. ein- und ausgefahren werden können. Diese Öffnung, die während des Beschichtungsvorganges offen bleibt, dient ausserdem der Beschickung und Entleerung der Trommel.

Bei der Vielzahl von Funktionen, denen die Öffnung dienen muss, stösst man bezüglich des verfügbaren Platzes an eine Grenze, die weitere Funktionen, z.B. weitere erwünschte Messungen verhindern würde. Ausserdem besteht ein Problem der Störung einer Messung durch die Sprüheinrichtung.

Der Erfindung liegt die Aufgabe zugrunde, diesen Engpass zu beheben.

Es wurde überraschend gefunden, dass NIR-Spektralmessungen durch die perforierte Trommelwand eines Trommelcoaters möglich sind und zu qualitativ hochwertigen Messergebnissen führen.

Erfindungsgemäss wird die Aufgabe demnach dadurch gelöst, dass die NIR-Messeinrichtung feststehend an der Aussenseite der rotierenden Trommelwand angeordnet ist und die Messung durch die Trommelwand hindurch erfolgt.

Im Folgenden wird anhand der beiliegenden Zeichnung ein bevorzugtes Ausführungsbeispiel der Erfindung beschrieben. Die Figur zeigt eine schematische perspektivische Darstellung eines Trommelcoaters für die Beschichtung von Tabletten

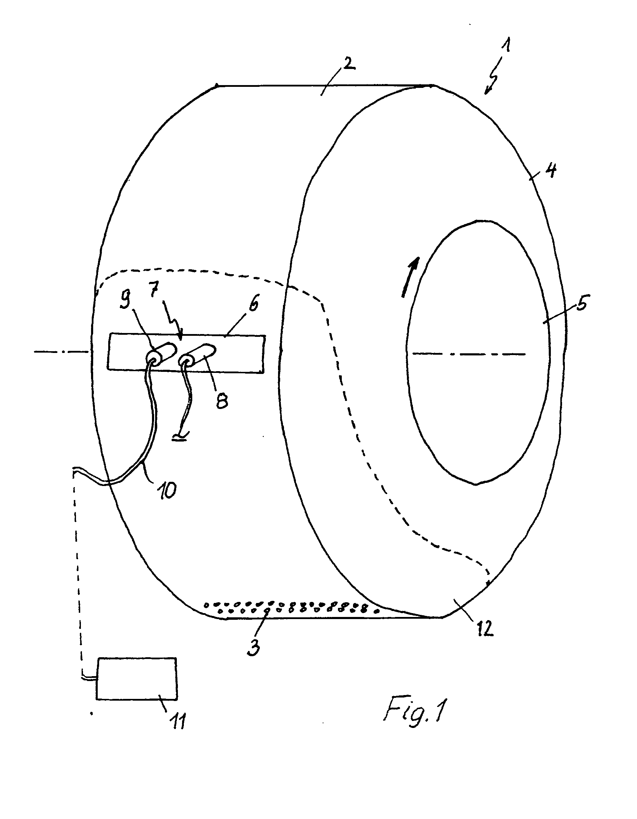

Die in Fig. 1 gezeigte typische Trommel 1 eines Trommelcoaters besteht im Wesentlichen aus einer zylindrischen Wand 2 und an die zylindrische Wand anschliessenden konischen Seitenwänden 4, wobei die frontseitige Seitenwand mit einer Öffnung 5 versehen ist. Die zylindrische Wand ist mit einer in der Zeichnung schematisch angedeuteten Perforation 3 versehen. Die Öffnung 5 dient dem Beschicken und Entleeren der Trommel und wird ausserdem zur Anordnung fest stehender Einrichtungen, wie z.B. einer Sprüheinrichtung, sowie ggf. anderen Geräten zur Behandlung und Messung eines Tablettenbetts 12 im Inneren der Trommel genutzt.

An der Aussenseite der Trommel etwa in Höhe der Trommelachse ist an einer feststehenden Halterung 6 eine NIR- Messeinrichtung 7 angebracht. Die Halterung 6 ist in der Zeichnung schematisch angedeutet. In der konkreten Ausführungsform ist sie Teil eines Gehäuses (nicht gezeigt), in welchem die Trommel angeordnet ist.

Die NIR-Messeinrichtung 7 besteht aus einer Lichtquelle 8, und einem Messkopf 9. Als Lichtquelle 8 kommt bei der vorliegenden Ausführungsform eine Tungsten Halogenlampe mit 7,5 W und als Messkopf ein unter der Bezeichnung Iris 7 im Handel erhältliches Gerät zum Einsatz. Der Lichtaustritt der Lampe ist bei der vorliegenden Ausführungsform in einem Abstand von ca. 10 mm von der Trommeloberfläche so angeordnet, dass der abgegebene Lichtstrahl senkrecht auf die Trommel trifft und durch die Perforation teilweise ins Innere der Trommel und zum Tablettenbett gelangt. Anstelle der bei der vorliegenden Ausführungsform verwendeten Geräte können selbstverständlich andere im Handel erhältliche Lichtquellen und Messköpfe eingesetzt werden.

Während des Beschichtungsprozesses, d.h. wenn sich ein Tablettenbett in der Trommel befindet und dort umgewälzt wird, wird ein Teil des Lichts spektral aufgelöst reflektiert und gelangt wiederum teilweise durch die Perforation nach aussen, wo es auf den Messkopf 9 trifft. Das Eingangsfenster des Messkopfes ist hier ebenfalls ca. 10 mm von der Trommeloberfläche entfernt angeordnet.

Das vom Messkopf 9 erfasste optische Signal wird über einen Lichtwellenleiter 10 zu einem Spektrometer 11 geleitet. Als Spektrometer kommt bei der vorliegenden Ausführungsform ein unter der Bezeichnung Tidas II im Handel erhältliches Gerät zum Einsatz. Es eignet sich zur Erfassung eines Spektrums von 1100 bis 2100 nm. Andere vergleichbare Geräte können selbstverständlich ebenfalls eingesetzt werden. Dabei kann das erfassbare Spektrum andere Bereiche umfassen.

In Versuchen wurde zunächst ermittelt, dass der Anteil des am Tablettenbett reflektierten Lichts, der zum Messkopf gelangt und dort erfasst wird, noch ausreicht um ein brauchbares Signal zu generieren, aus dem das Spektrum des Tablettenbetts zuverlässig ermittelt werden kann. In weiteren Versuchen wurde festgestellt, dass Einflüsse der Trommelwand nicht mit dem Spektrum des Tablettenbetts interferieren oder ohne weiteres kompensierbar sind.

Als Beispiel wurden Vergleichsmessungen an Acetylsalicylsäure-Tabletten durchgeführt und zwar erste Messungen durch die perforierte Trommelwand und zweite Messungen ohne Hindernis zwischen dem Tablettenbett und dem Messkopf. Die Spektren, die mit den beiden unterschiedlichen Mess-Situationen erhalten wurden, sind bis auf eine lineare Verschiebung, die mittels einer Basislinienkorrektur eliminiert werden kann, im Wesentlichen deckungsgleich.

## Patentansprüche

1. Filmcoatingvorrichtung mit einer Trommel mit einer perforierten zylindrischen Wand (3) und einer Einrichtung zur NIR-Spektralmessung, **dadurch gekennzeichnet, dass** die NIR-Messeinrichtung (7) feststehend an der Aussenseite der rotierenden Trommelwand (2) angeordnet ist und die Messung durch die Trommelwand (2) hindurch erfolgt.

2. Filmcoatingvorrichtung nach Anspruch 1, **dadurch gekennzeichnet, dass** die NIR-Messeinrichtung (7) eine Lichtquelle (8) und einen Messkopf (9) umfasst, die in einem vom jeweiligen Messgerät abhängigen Abstand von der Trommelwand (2) angeordnet sind.

## Claims

1. A film coating device having a drum with a perforated cylindrical wall (3) and a unit for NIR spectral measurement, **characterized in that** the NIR measuring unit (7) is stationarily arranged on the outside of the rotating drum wall (2) and the measurement is carried out through the drum wall (2).

2. The film coating device according to claim 1, **characterized in that** the NIR measuring unit (7) comprises a light source (8) and a measuring head (9) which are arranged spaced apart from the drum wall (2) at a distance depending on the respective measuring device.

## Revendications

1. Dispositif de revêtement par film, comportant un tambour avec une paroi cylindrique perforée (3) et un dispositif de mesure spectrale dans l'infrarouge proche, **caractérisé en ce que** le dispositif de mesure dans l'infrarouge proche (7) est implanté fixe sur la face extérieure de la paroi du tambour (2) en rotation et **en ce que** la mesure s'opère au travers de la paroi du tambour (2) .

2. Dispositif de revêtement par film selon la revendication 1, **caractérisé en ce que** le dispositif de mesure dans l'infrarouge proche (7) comprend une source lumineuse (8) et une tête de mesure (9) qui sont disposées par rapport à la paroi du tambour (2) à une distance qui dépend de l'appareil de mesure utilisé.
